# EUROPÄISCHE PATENTSCHRIFT

(11) **EP 1 150 270 B1**
(45) Veröffentlichungstag und Bekanntmachung des Hinweises auf die Patenterteilung: **05.12.2001**
(21) Anmeldenummer: 00108603.2
(22) Anmeldetag: 20.04.2000
(51) Int. Cl.: G09F 3/02, B32B 15/12, G09F 3/03

(54) **Metallisiertes Papier mit eingearbeitetem Sicherheitsmerkmal**
Metallised paper including security features
Papier métallisé comprenant des caractéristiques de sécurité

(43) Veröffentlichungstag der Anmeldung: 31.10.2001
(73) Patentinhaber: TRICON Veredlungs GmbH, 79111 Freiburg (DE)
(72) Erfinder: Antochin, Sergej, 79279 Vörstetten (DE); Hartmann, Walter, 79108 Freiburg i. Br. (DE); Klausmann, Jürgen, 79100 Freiburg i. Br. (DE); Walter, Hermann, 79232 Neuershausen (DE)
(74) Vertreter: Sternagel, Fleischer, Godemeyer & Partner Patentanwälte

(56) Entgegenhaltungen:
- EP-A- 0 794 522
- US-A- 5 388 862
- PATENT ABSTRACTS OF JAPAN vol. 1997, no. 05, 30. Mai 1997 (1997-05-30) & JP 09 001720 A (SAPPORO BREWERIES LTD;NEW OJI PAPER CO LTD), 7. Januar 1997 (1997-01-07)

## Beschreibung

Gegenstand der Erfindung ist ein metallisiertes Papier mit einem optisch erkennbaren Sicherheitsmerkmal, insbesondere ein hochglänzendes metallisiertes Papier. Ein oder mehrere ausgewählte Teilflächen weisen einen gegenüber der Hauptfläche veränderten Oberflächenglanz auf.

Metallisierte Papiere für die unterschiedlichsten Zwecke, beispielsweise Etiketten oder Verpackungszwecke, sind seit langem bekannt. Der erwünschte metallische Glanz wird jedoch nur erreicht, wenn die Oberfläche des Trägerpapiers, auf die die dünne Metallschicht aufgebracht wird, ausreichend glatt ist. Um dies zu gewährleisten wird auf die zu metallisierende Oberfläche eines Trägerpapiers üblicherweise eine Vorlackschicht aufgebracht. Auf die anschließend aufgebrachte dünne glänzende Metallschicht wird zu deren Schutz und zur Verbesserung der Bedruckbarkeit des metallisierten Papiers häufig eine transparente Decklackschicht aufgebracht.

Ein derartiges Papier ist aus der JP-A 09001720 bekannt.

Aufgabe der vorliegenden Erfindung ist es, ein metallisiertes Papier mit einem zusätzlichen Sicherheitsmerkmal zu versehen.

Diese Aufgabe wird gelöst durch ein metallisiertes Papier aus einem Trägerpapier mit einer Vorlackschicht und einer darauf angeordneten Metallschicht und einer darauf angeordneten transparenten Decklackschicht, das dadurch gekennzeichnet ist, daß an einer oder mehreren ausgewählten Teilfläche(n) (i) keine Vorlackschicht oder (ii) eine dünnere Vorlackschicht als auf der Hauptfläche, und/oder eine Vorlackschicht mit einer anderen Zusammensetzung als die Hauptlackschicht vorhanden ist (sind).

Die eine oder mehreren ausgewählte(n) Teilfläche(n) weist (weisen) eine von der Hauptfläche abweichende unterschiedliche Oberflächenrauhigkeit auf, so daß sich die Reflexion von Strahlung der darauf aufgebrachten Metallschicht auf der Hauptfläche von der der ausgewählten Teilfläche(n) unterscheidet. Die unterschiedliche Oberflächenrauhigkeit führt zu unterschiedlicher Ausbildung der Metallschicht mit unterschiedlichem Oberflächenglanz.

Die ausgewählte(n) Teilfläche(n) kann (können) die Form von Buchstaben und/oder Zahlen und/oder Bildern, beispielsweise Logos von Firmen, Marken oder Kombinationen unterschiedlicher Formen, haben.

Die üblicherweise in Bahnform hergestellten oder als Formate ausgerüsteten metallisierten Papiere können dann eine Vielzahl von Gruppen einer oder mehrerer ausgewählter Teilflächen parallel zueinander oder versetzt gegeneinander und hintereinander aufweisen, wobei die Abstände und Größen der Gruppierungen an den endgültigen Verwendungszweck des metallisierten Papieres angepaßt sind.

Die Vorlackschicht auf dem Trägerpapier zum Herstellen der für die Metallisierung erwünschten Oberflächenglätte kann ein Flächengewicht (trocken) von 0,8 g/m² bis 3 g/m², vorzugsweise von 1 g/m² bis 2 g/m² aufweisen. Dies ergibt Schichtdicken von 0,7 *µ* m bis 2,7 *µ*m, vorzugsweise von 0,9 *µ*m bis 1,8 *µ*m für die Hauptfläche.

Dünnere Vorlackschichten als auf der Hauptfläche auf ein oder mehreren ausgewählten Teilfläche(n) haben vorzugsweise ein Flächengewicht (trocken) von 0,1 g/m² bis 1 g/m². Die Schichtdicken können von 0,09 *µ*m bis 0,9 *µ*m betragen.

Die eine oder mehrere ausgewählten Teilfläche(n) können auch mit einer anderen Vorlackzusammensetzung als auf der Hauptfläche beschichtet sein, um die erfindungsgemäBe, gegenüber der Hauptfläche unterschiedliche Oberflächenrauhigkeit auf der (den) ausgewählten Teilfläche(n) zu erzeugen.

Das Fehlen der Vorlackschicht oder dünnere Vorlackschicht oder die andere Zusammensetzung der Vorlackschicht auf der (den) ausgewählten Teilfläche(n) gegenüber der Hauptfläche haben ein unterschiedliches Reflexionsverhalten von abgeschiedenen Metallen zur Folge. Diese unterschiedliche Reflexion von Strahlung ist optisch sichtbar. Die Hauptfläche kann den erwünschten metallischen Spiegelglanz aufweisen. Demgegenüber ist der Glanz der metallischen Schicht an der oder den ausgewählten Teilfläche(n) geringer und kann bis zu mattem Aussehen abfallen.

Umgekehrt ist es auch möglich, daß nach dem Aufbringen der Metallschicht die Hauptfläche einen geringeren Glanz aufweist als die eine oder mehrere ausgewählte(n) Teilfläche(n).

Dieses unterschiedliche optische Aussehen der Oberfläche des metallisierten Papieres bleibt auch nach dem Aufbringen der transparenten Decklackschicht auf die Metallschicht erhalten. Der optische Eindruck der ausgewählten Teilfläche(n) ist mit denen eines Wasserzeichens bei Papieren vergleichbar und kann durch Bedrucken der Decklackschicht nicht erzeugt werden, weil die Brillanz von auf der Decklackschicht aufgedruckten Mustern vom Reflexionsverhalten der Metallschicht erheblich beeinflußt wird.

Die erfindungsgemäBe Ausbildung eines unterschiedlichen optischen Aussehens der Metallschicht auf der Hauptfläche und der (den) einen oder mehreren ausgewählten Teilfläche(n) ist ein Sicherheitsmerkmal für das metallisierte Papier und erschwert Fälschungen. Bei Verwendung des metallisierten Papieres als Etiketten oder für Verpackungszwecke hat ein solches Sicherheitsmerkmal, z.B. wenn die ausgewählten Teilflächen die Form eines Firmenlogos einer Marke oder eines Namens aufweisen, den Vorteil, daß Nachahmung und Fälschung der Originalware relativ leicht erkennbar sind.

Nach dem Aufbringen der Decklackschicht liegt der Oberflächenglanz des erfindungsgemäßen metallisierten Papieres gemessen nach DIN 67530 bei einem Meßwinkel von 60°, dann, wenn die Metallschicht der Hauptfläche metallischen Glanz aufweist, in diesem Flächenbereich vorzugsweise über 30, ganz besonders bevorzugt beträgt der Oberflächenglanz von 35 bis 80.

Demgegenüber weist die Metallschicht der ausgewählten Teilfläche(n) ein anderes Aussehen auf, das zu geringerem Oberflächenglanz dieser Teilflächen gegenüber der Hauptfläche führt.

Um das gewünschte unterschiedliche Aussehen von Hauptfläche und der einen oder mehreren ausgewählten Teilfläche(n) zu erreichen, sollte der Glanzunterschied des metallisierten Papieres nach dem Aufbringen der Decklackschicht bei einem Meßwinkel von 60° zwischen Hauptfläche und ausgewählten Teilflächen mindestens 10, vorzugsweise von 20 bis 50, betragen.

Bei Ausführungsformen, bei denen bereits die Metallschicht im Bereich der Hauptfläche einen geringeren Glanz als die eine oder mehreren ausgewählten Teilfläche(n) hat, führt dies nach dem Aufbringen der Decklackschicht zu entsprechenden Glanzunterschieden. Bei solchen Ausführungsformen weist die Hauptoberfläche vorzugsweise einen Oberflächenglanz, gemessen nach DIN 67530 bei einem Meßwinkel von 60° von unter 20 auf. Ganz besonders bevorzugt beträgt der Oberflächenglanz der Hauptfläche bei einem Heßwinkel von 60° von 10 bis 20.

Bei diesen Ausführungsformen der Erfindung weist (weisen) die ausgewählte(n) Teilfläche(n) einen höheren Glanz als die Hauptfläche auf. Die Differenz sollte bei Meßwinkel 60° mindestens 10 betragen, vorzugsweise beträgt die Differenz von 20 bis 50.

Geeignete Trägerpapiere sind gestrichene und/oder satinierte Papiere, gußgestrichene Papiere mit Flächengewichten von 40 g/m² bis 250 g/m², vorzugsweise von 60 g/m² bis 100 g/m².

Sogenannte gußgestrichene Papiere, deren Pigment und Bindemittel enthaltender Strich durch Anliegen an eine hochglänzende beheizte Metalloberfläche geglättet wurde, weisen in der Regel eine für das Aufbringen der Vorlackschicht geeignete Oberfläche auf. Die Oberfläche üblicher oberflächengeleimter Strichrohpapiere oder mit Pigment und Bindemittel enthaltenden Beschichtungen versehene Papiere (gestrichene Papiere) wird, falls erforderlich, durch Satinage (Kalanderbehandlung) geglättet, um die für das Aufbringen der Vorlackschicht geeignete Oberfläche zu schaffen.

Die für die Aufnahme der Vorlackschicht geeignete Oberfläche sollte eine Oberflächenglätte gemessen nach ISO 5627 von mindestens 800, vorzugsweise von 800 bis 2200, haben.

Vorlacke auf wäßriger Basis oder auf organischer Lösemittelbasis sind zum Ausbilden der Vorlackschicht geeignet. Sie enthalten als filmbildende Bindemittel Polyamid, Epoxyharze, Polyurethanharze, Harze auf Basis von (Meth)acrylsäure und oder deren Estern sowie Copolymeren derselben, Nitrocellulose, Polyvinylchloridmischpolymere, Polyvinylidenchlorid, mit Elektronenstrahlen oder UV-Strahlung härtbare Harzsysteme oder Mischungen derselben.

Gegebenenfalls können die Vorlackzusammensetzungen auch Füllstoffe/Pigmente enthalten, insbesondere dann, wenn die ausgewählten Teilflächen mit einer anderen Vorlackzusammensetzung als die Hauptfläche versehen werden sollen.

Um das Metallaufnahmeverhalten der ausgewählten Teilflächen gegenüber der Hauptfläche zu verändern, ist es neben dem Weglassen von Vorlack oder gegenüber der Hauptfläche dünner ausgebildeten Vorlackschichten beispielsweise auch möglich, den Vorlack vollflächig auf das Trägerpapier aufzubringen und auf die ausgewählten Teilflächen zusätzlich noch eine andere Vorlackzusammensetzung aufzubringen. Beispielsweise eine Vorlackzusammensetzung, die ein mattierendes Pigment enthält.

Geeignete Pigmente für Vorlackzusammensetzungen sind Kieselsäure, Calciumcarbonat, Calciumsulfat, Bariumsulfat, Titandioxid, Zinkoxid, Kaolin, Bentonite, Talkum oder Mischungen derselben.

Ein bevorzugtes Mattierungsmittel zum Erzeugen einer rauheren Vorlackschicht ist pyrogene Kieselsäure.

Die Vorlackzusammensetzungen können mit üblichen bekannten Auftragsverfahren aufgebracht werden, beispielsweise Tiefdruck im Gleich- und Gegenlauf, Flexodruck, Siebdruck, Tampondruck, indirekter Tiefdruck.

Besonders bevorzugt ist es, die Vorlackschicht mittels Druckverfahren aufzubringen, weil dies das Ausbilden von gegenüber der Hauptfläche unterschiedlicher Vorlackierung von ausgewählten Teilflächen erleichtert.

Nach DIN 16518:1964-08 werden beim Tiefdruck tiefliegende, druckende Teile der Druckform mit Druckfarbe gefüllt und diese wird von der Druckform direkt auf das Substrat abgegeben.

Bei Hochdruckverfahren, wie Flexodruck, werden hochstehende Teile der Druckform gleichmäßig dünn eingefärbt und durch direktes Anpressen auf die zu bedruckende Oberfläche abgegeben.

Beim Siebdruck werden Druckformen verwendet, die an den druckenden Stellen druckfarbendurchlässig sind.

Die Metallschicht kann durch einfaches oder mehrfaches Aufdampfen im Vakuum oder andere übliche physikalische Dampfabscheideverfahren, beispielsweise durch Kathodenzerstäubung, aufgebracht werden. Schichtdicken von 10 bis 100 nm sind in der Regel ausreichend, um die gewünschte Wirkung der Metallschicht zu erreichen.

Abscheiden derartiger Schichten durch thermisches Aufdampfen oder Kathodenzerstäubung unter vermindertem Druck ist eine dem Fachmann gut bekannte Beschichtungstechnik, wobei unter üblichen Bedingungen gearbeitet werden kann, um die erfindungsgemäße Metallschicht auszubilden. Die Schicht kann auch durch Mehrfachabscheidung erzeugt werden. Bei Mehrfachabscheidung können gleiche oder unterschiedliche Metalle abgeschieden werden.

Geeignete Metalle sind Aluminium, Silber, Gold, Kupfer, Zinn, Zink, Chrom und Legierungen dieser Metalle. Besonders bevorzugt sind Aluminium und Aluminiumlegierungen.

Die auf die Metallschicht aufgebrachte transparente Decklackschicht soll die Metallschicht gegenüber Korrosion schützen und die Bedruckbarkeit der erfindungsgemäßen metallisierten Papiere verbessern.

Das Auftragsgewicht (trocken) kann von 0,5 bis 2,0 g/m², vorzugsweise bis 1,0 g/m², betragen.

Geeignete Decklackzusammensetzungen enthalten als Filmbildner Polyamid, Epoxyharze, Polyurethanharze, Harze auf Basis von (Meth)acrylsäure und/oder deren Estern sowie Copolymere derselben, Nitrocellulose, Polyvinylchloridmischpolymere, Polyvinylidenchlorid, durch Elektronenstrahlen oder UV-Strahlung härtbare Harzsysteme.

Die Decklackzusammensetzungen können noch übliche Hilfsstoffe, wie beispielsweise UV-Stabilisatoren. Verlaufshilfsmittel, Härter für Harze, Gleitmittel, Antischaummittel, Viskositätsregler, Antistatika, Dispergierhilfsmittel, Antiabsetzmittel, Farbstoffe, die Transparenz nur geringfügig verringernde Füllstoffe/Pigmente usw. enthalten.

Das Aufbringen der Decklackschicht kann mit üblichen bekannten Verfahren erfolgen, z.B. Tiefdruck. Bevorzugt sind Druckverfahren, insbesondere Tiefdruck im Gleich- und Gegenlauf.

Die Abbildungen zeigen schematisch Längsschnitte durch das erfindungsgemäße metallisierte Papier, aus der die Ausbildung der Schichten auf der Hauptfläche und im Bereich ausgewählter Teilflächen ersichtlich ist.

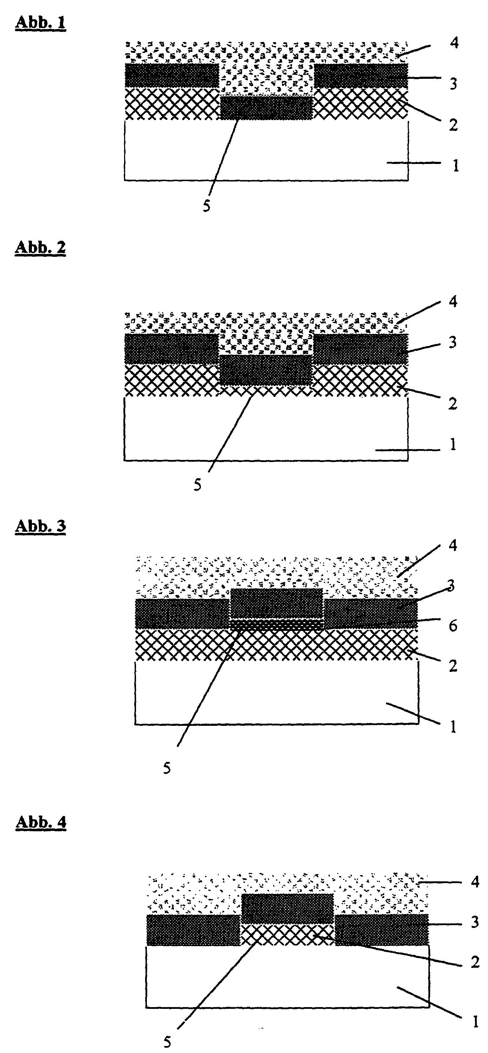

In Abb. 1 ist das Trägerpapier mit 1 bezeichnet. Darauf angeordnet ist die Vorlackschicht 2 im Bereich der Hauptfläche. Auf der ausgewählten Teilfläche 5 fehlt die Vorlackschicht. Auf das derart vorbereitete Trägermaterial wurde die Metallschicht 3 vollflächig aufgebracht, wobei das Metall auf der Teilfläche 5 direkt auf dem Trägerpapier 1 abgeschieden wurde. Dies hat zur Folge, daß in diesem Bereich die Metallschicht eine gegenüber der Hauptfläche veränderte Struktur und einen anderen Glanz aufweist. Die transparente Decklackschicht 4 ist vollflächig auf Hauptfläche und ausgewählter Teilfläche angeordnet und füllt auch die "Fehlstelle" im Bereich der ausgewählten Teilfläche 5 aus. Der Glanzunterschied der Metallschicht 3 zwischen Hauptfläche und ausgewählter Teilfläche ist durch die transparente Deckschicht 4 sichtbar.

In Abb. 2 ist eine Ausführungsform gezeigt, bei der auf dem Trägerpapier 1 die Vorlackschicht 2 im Bereich der ausgewählten Teilfläche 5 dünner ausgebildet ist als auf der Hauptfläche. Durch die auf der ausgewählten Teilfläche 5 dünnere Vorlackschicht 2 unterscheidet sich die Metallschicht 3 im Bereich der Teilfläche 5 in der Struktur und im Glanz von der Metallschicht auf der Hauptfläche. Dieser Glanzunterschied ist ebenfalls durch die transparente Decklackschicht 4 sichtbar.

In Abb. 3 ist eine Ausführungsform gezeigt, mit vollflächiger Vorlackschicht 2 auf dem Trägerpapier 1. Im Bereich der ausgewählten Teilfläche 5 ist eine andere Vorlackzusammensetzung zusätzlich auf die Vorlackschicht 2 aufgebracht, die durch Anwesenheit von Füllstoffen ein anderes Laufverhalten aufweist und eine rauhere Oberfläche ausbildet als die Vorlackschicht 2. Dadurch weist die Metallschicht 3 auf der ausgewählten Teilfläche 5 einen anderen Glanz auf als auf der Hauptfläche. Auch in diesem Falle ist der Unterschied des Glanzes durch die transparente Decklackschicht 4 sichtbar.

Die Erfindung wird durch die nachfolgenden Beispiele noch näher erläutert.

### Beispiel 1

Auf ein gußgestrichenes Papier mit einem Flächengewicht von 80 g/m² mit einem Oberflächenglanz, gemessen unter einem Meßwinkel von 60°, von 70 wird eine Vorlackzusammensetzung. enthaltend Acrylatcopolymer in Ethylacetat gelöst, mit einem Flächengewicht von 1,8 g/m² (Trockengewicht) aufgebracht. Im Bereich der ausgewählten Teilflächen wird durch partiell fehlende Rasterung der Tiefdruckwalze das Auftragsgewicht auf 0 bis 0,2 g/m² verringert.

Auf das so vorbereitete Trägermaterial wird unter einem Druck von 10⁻⁴ hPa eine Aluminiumschicht aus Reinstaluminium aufgedampft. Die Schichtdicke beträgt ca. 20-30 nm.

Der Glanz der aufgedampften Metallschicht, gemessen unter einem Meßwinkel von 60°, beträgt auf der Hauptfläche 90 und auf der ausgewählten Teilfläche mit der dünneren Vorlackschicht 75.

Mittels Tiefdruck wird eine Decklackzusammensetzung, enthaltend Acrylatcopolymer gelöst in Ethylacetat, mit einem Flächengewicht von 0,5 g/m² (trocken) aufgedruckt.

Die ausgewählten Teilflächen haben die Form von Rauten.

Diese Form ist durch die Decklackschicht deutlich sichtbar, weil die Aluminiumschicht auf den ausgewählten Teilflächen nicht hochglänzend metallisch, sondern leicht grau ist.

Das metallisierte und überlackierte Papier weist einen Oberflächenglanz der Hauptfläche, gemessen unter einem Meßwinkel von 60°, von 70 auf. Im Bereich der ausgewählten Teilflächen beträgt der Glanz bei Meßwinkel 60° nur 30.

Das erfindungsgemäße Material wird für Etiketten oder als Verpackungspapier verwendet.

Für die Endverwendung erfolgt ein Bedrucken, wobei die Form des Sicherheitselementes auf den ausgewählten Teilflächen auch nach dem Bedrucken des Etiketts noch deutlich sichtbar ist.

### Beispiel 2

Auf ein gestrichenes Papier mit einem Flächengewicht von 70 g/m² mit einem Oberflächenglanz, gemessen unter einem Meßwinkel von 60°, von ca. 30 wird eine Vorlackzusammensetzung, enthaltend ein Polyamid, in Ethylacetat gelöst, mit einem Flächengewicht von 1,5 g/m² aufgebracht. Durch Verringerung des Schöpfvolumens an definierten Stellen der Rasterwalze wird an den ausgewählten Stellen ein Flächenauftrag von 0,5 g/m² (trocken) erreicht.

Auf das so vorbereitete Trägermaterial wird unter einem Druck von 10⁻⁴hPa eine Kupferschicht aus Reinstkupfer aufgedampft. Die Schichtdicke beträgt ca. 40-50 nm.

Der Glanz der aufgedampften Metallschicht, gemessen unter einem Meßwinkel von 60°, beträgt auf der Hauptfläche 60 und auf der ausgewählten Teilfläche mit der dünneren Vorlackschicht 30.

Mittels Tiefdruck wird eine Decklackzusammensetzung, enthaltend Polyamid in Ethylacetat gelöst, mit einem Flächengewicht von 0,8 g/m² (trocken) aufgedruckt.

Die aufgedruckten Teilflächen haben die Form von Kreisen.

Diese Form ist durch die Decklackschicht deutlich sichtbar, weil die Kupferschicht auf den ausgewählten Teilflächen nicht hochreflektierend metallisch, sondern bräunlich ist.

Das metallisierte und überlackierte Papier weist einen Oberflächenglanz der Hauptfläche, gemessen unter einem Meßwinkel von 60°, von 35 auf. Im Bereich der ausgewählten Teilfläche beträgt der Glanz bei einem Meßwinkel von 60° nur 15.

Das erfindungsgemäße Material wird als Verpackungsmaterial verwendet.

### Beispiel 3

Auf ein gestrichenes Papier mit einem Flächengewicht von 70 g/m2 mit einem Oberflächenglanz, gemessen unter einem Meßwinkel von 60°, von ca. 25 wird eine Vorlackzusammensetzung, enthaltend ein Polyacrylat in Ethylacetat gelöst, mit einem Flächengewicht von 1,8 g/m² aufgebracht.

Auf das vorlackierte Papier wird mit einer Rasterwalze, die an ausgewählten Stellen ein definiertes Schöpfvolumen aufweist, ein Mattlack aufgebracht. Dieser Mattlack, basierend auf Polyacrylat in Ethalacetat, enthält dispergierte amorphe Kieselsäure und Titandioxid.

An den ausgewählten Stellen wird ein Flächenauftrag von 0,5 g/m² (trocken) erreicht.

Auf das so vorbereitete Trägermaterial wird unter einem Druck von 10⁻⁴hPa eine Legierungsschicht aus Kupfer und Aluminium aufgedampft. Die Schichtdicke beträgt ca. 20-30 nm.

Der Glanz der aufgedampften Metallschicht, gemessen unter einem Meßwinkel von 60°, beträgt auf der Hauptfläche 55 und auf der ausgewählten Teilfläche mit der Mattlackschicht 20.

Mittels Tiefdruck wird eine Decklackzusammensetzung, enthaltend Polyacrylat in Ethylacetat gelöst, mit einem Flächengewicht von 1,0 g/m² (trocken) aufgedruckt.

Die aufgedruckten Teilflächen haben die Form von Buchstaben.

Diese Form ist durch die Decklackschicht deutlich sichtbar, weil die Legierungsschicht auf den ausgewählten Teilflächen nicht hochreflektierend metallisch, sondern metallisch matt ist.

Das metallisierte und überlackierte Papier weist einen Oberflächenglanz der Hauptfläche, gemessen unter einem Meßwinkel von 60°, von 40 auf. Im Bereich der ausgewählten Teilfläche beträgt der Glanz bei einem Meßwinkel von 60° nur 10.

Das erfindungsgemäße Material wird als Verpackungsmaterial verwendet.

### Beispiel 4

Auf ein gestrichenes Papier mit einem Flächengewicht von 70 g/m² mit einem Oberflächenglanz, gemessen unter einem Meßwinkel von 60°, von ca. 30 wird mit einer Rasterwalze, die an ausgewählten Stellen ein definiertes Schöpfvolumen aufweist, eine Vorlackzusammensetzung, enthaltend ein Polyacrylat in Ethylacetat gelöst, mit einem theoretischen Flächengewicht von 1,6 g/m² aufgebracht.

Auf das so vorbereitete Trägermaterial wird unter einem Druck von 10⁻⁴hPa eine Aluminiumschicht aus Reinstaluminium aufgedampft. Die Schichtdicke beträgt ca. 20-30 nm.

Der Glanz der aufgedampften Metallschicht, gemessen unter einem Meßwinkel von 60°, beträgt auf der Hauptfläche 20 und auf der ausgewählten Teilfläche 50.

Mittels Tiefdruck wird eine Decklackzusammensetzung, enthaltend Polyacrylat in Ethylacetat gelöst, mit einem Flächengewicht von 1,5 g/m² (trocken) aufgedruckt.

Die aufgedruckten Teilflächen haben die Form von Buchstaben.

Diese Form ist durch die Decklackschicht deutlich sichtbar, weil die Aluminiumschicht auf den ausgewählten Teilflächen deutlich hochglänzend und nicht grau ist.

Das metallisierte und überlackierte Papier weist einen Oberflächenglanz der Hauptfläche, gemessen unter einem Meßwinkel von 60°, von 15 auf. Im Bereich der ausgewählten Teilfläche beträgt der Glanz bei einem Meßwinkel von 60° von 40.

Das erfindungsgemäße Material wird als Etikettenpapier verwendet.

### BEZUGSZIFFERNLISTE

- 1: Papierträger
- 2: Vorlackschicht
- 3: Metallschicht
- 4: Decklackschicht
- 5: ausgewählte Teilfläche
- 6: Mattlack

## Patentansprüche

1. Metallisiertes Papier aus einem Trägerpapier mit einer Vorlackschicht, einer darauf angeordneten Metallschicht und einer darauf angeordneten transparenten Decklackschicht, **dadurch gekennzeichnet, daß** an einer oder mehreren ausgewählten Teilfläche(n)
(i) keine Vorlackschicht oder
(ii) eine dünnere Vorlackschicht als auf der Hauptfläche und/oder
(iii) eine Vorlackschicht mit einer anderen Zusammensetzung als die Zusammensetzung der Hauptfläche vorhanden ist (sind).

2. Metallisiertes Papier nach Anspruch 1, **dadurch gekennzeichnet,**
**daß** die eine oder mehreren ausgewählte(n) Teilfläche(n) die Form von Buchstaben und/oder Zahlen und/oder Bildern oder Kombinationen derselben haben.

3. Metallisiertes Papier nach Anspruch 1 oder 2, **dadurch gekennzeichnet,**
**daß** es nach dem Aufbringen der Decklackschicht auf die Hauptfläche einen Oberflächenglanz, gemessen nach DIN 67530 bei einem Meßwinkel von 60°, über 30 aufweist.

4. Metallisiertes Papier nach Anspruch 3, **dadurch gekennzeichnet,**
**daß** die eine oder mehreren ausgewählte(n) Teilfläche(n) einen geringeren Oberflächenglanz als die Hauptfläche aufweist (aufweisen).

5. Metallisiertes Papier nach Anspruch 4, **dadurch gekennzeichnet, daß** die Differenz des Oberflächenglanzes zwischen Hauptfläche und einer oder mehreren ausgewählten Teilfläche(n) bei einem Meßwinkel von 60° mindestens 10 beträgt.

6. Metallisiertes Papier nach Anspruch 1 oder 2, **dadurch gekennzeichnet, daß** es nach dem Aufbringen der Decklackschicht auf der Hauptfläche einen Oberflächenglanz, gemessen nach DIN 67530 bei einem Meßwinkel von 60°, von unter 30 aufweist.

7. Metallisiertes Papier nach Anspruch 6, **dadurch gekennzeichnet,**
**daß** die eine oder mehreren ausgewählte(n) Teilfläche(n) einen höheren Oberflächenglanz als die Hauptfläche aufweist (aufweisen).

8. Metallisiertes Papier nach Anspruch 7, **dadurch gekennzeichnet,**
**daß** die Differenz des Oberflächenglanzes zwischen Hauptfläche und einer oder mehreren ausgewählten Teilfläche(n) bei einem Meßwinkel von 60° mindestens 10 beträgt.

9. Metallisiertes Papier nach einem der vorstehenden Ansprüche,
**dadurch gekennzeichnet,**
**daß** die Metallschicht Aluminium, Silber, Gold, Kupfer, Zinn, Chrom, Zink oder Legierungen dieser Metalle enthält.

10. Verwendung des metallisierten Papieres nach einem der Ansprüche 1 bis 9 als Etikett oder Verpackungsmaterial.

## Claims

1. Metallised paper comprising a base paper having an undercoat lacquer, a metallic coating arranged thereon and a transparent topcoat lacquer arranged thereon, **characterised in that**, in one or more selected subarea(s), there is
(i) no undercoat lacquer or
(ii) a thinner undercoat lacquer than on the main area and/or
(iii) an undercoat lacquer having a composition which is different to the composition of the main area.

2. Metallised paper according to Claim 1, **characterised in that** the one or more selected sub-area(s) are in the form of letters and/or numbers and/or images or combinations of these.

3. Metallised paper according to Claim 1 or 2, **characterised in that**, after the topcoat lacquer has been applied to the main area, the metallised paper has a surface lustre higher than 30, measured in accordance with DIN 67530 at a measuring angle of 60°.

4. Metallised paper according to Claim 3, **characterised in that** the one or more selected sub-area(s) has (have) a lower surface lustre than the main area.

5. Metallised paper according to Claim 4, **characterised in that**, at a measuring angle of 60°, the difference between the surface lustre of the main area and one or more selected sub-area(s) is at least 10.

6. Metallised paper according to Claim 1 or 2, **characterised in that**, after the topcoat lacquer has been applied to the main area, the metallised paper has a surface lustre lower than 30, measured in accordance with DIN 67530 at a measuring angle of 60°.

7. Metallised paper according to Claim 6, **characterised in that** the one or more selected sub-area(s) has (have) a higher surface lustre than the main area.

8. Metallised paper according to Claim 7, **characterised in that**, at a measuring angle of 60°, the difference between the surface lustre of the main area and one or more selected sub-area(s) is at least 10.

9. Metallised paper according to one of the preceding claims, **characterised in that** the metallic coating contains aluminium, silver, gold, copper, tin, chrome, zinc or alloys of these metals.

10. Use of the metallised paper according to one of Claims 1 to 9 as a label or packaging material.

## Revendications

1. Papier métallisé, consistant en une feuille de papier de support munie d'une première couche de laque, une couche métallique disposée sur celle-ci et une couche de laque de finition, transparente et disposée sur cette dernière, **caractérisé en ce que**, au niveau d'une ou de plusieurs surface(s) partielle(s) sélectionnée(s),
(i) il n'y a pas de première couche de laque, ou
(ii) il existe une première couche de laque, qui est plus mince que sur la surface principale, et/ou
(iii) il existe une première couche de laque, ayant une composition différente de la composition de la surface principale.

2. Papier métallisé selon la revendication 1,
**caractérisé en ce que** la ou les surface(s) partielle(s) sélectionnée(s) ont la forme de lettres et/ou de chiffres et/ou d'images, ou bien de combinaisons de ceux-ci.

3. Papier métallisé selon la revendication 1 ou 2, **caractérisé en ce qu'**il présente, après l'application de la couche de laque de finition sur la surface principale, un brillant de surface supérieur à 30, mesuré selon la norme DIN 67530 pour un angle de mesure de 60°.

4. Papier métallisé selon la revendication 3,
**caractérisé en ce que** la ou les surface(s) partielle(s) sélectionnée(s) présente(nt) un brillant de surface inférieur à celui de la surface principale.

5. Papier métallisé selon la revendication 4,
**caractérisé en ce que** la différence du brillant de surface entre la surface principale et une ou plusieurs surface(s) partielle(s) sélectionnée(s) est d'au moins 10, pour un angle de mesure de 60°.

6. Papier métallisé selon la revendication 1 ou 2, **caractérisé en ce qu'**il présente, après l'application de la couche de laque de finition sur la surface principale, un brillant de surface inférieur à 30, mesuré selon la norme DIN 67530 pour un angle de mesure de 60°.

7. Papier métallisé selon la revendication 6,
**caractérisé en ce que** la ou les surface(s) partielle(s) sélectionnée(s) présente(nt) un brillant de surface supérieur à celui de la surface principale.

8. Papier métallisé selon la revendication 7,
**caractérisé en ce que** la différence du brillant de surface entre la surface principale et une ou plusieurs surface(s) partielle(s) sélectionnée(s) est d'au moins 10, pour un angle de mesure de 60°.

9. Papier métallisé selon l'une des revendications précédentes, **caractérisé en ce que** la couche métallique contient de l'aluminium, de l'argent, de l'or, du cuivre, de l'étain, du chrome, du zinc ou bien des alliages de ces métaux.

10. Utilisation du papier métallisé selon l'une des revendications 1 à 9, en tant qu'étiquette ou que matière d'emballage.
